# EUROPÄISCHE PATENTSCHRIFT

(11) **EP 0 322 732 B1**
(45) Veröffentlichungstag und Bekanntmachung des Hinweises auf die Patenterteilung: **09.02.1994**
(21) Anmeldenummer: 88121379.7
(22) Anmeldetag: 21.12.1988
(51) Int. Cl.: C04B 37/00, C04B 37/02

(54) **Verfahren zum Verbinden eines Siliciumcarbid-Formteils mit einem weiteren Formteil aus Siliciumcarbid oder Metall**
Method of joining an article of silicon carbide to another article of silicon carbide or metal
Procédé d'assemblage d'une pièce en carbure de silicium avec une autre pièce en carbure de silicium ou métal

(30) Priorität: 24.12.1987 DE 3744245; 24.12.1987 DE 3744250; 11.04.1988 DE 3811945
(43) Veröffentlichungstag der Anmeldung: 05.07.1989
(73) Patentinhaber: FORSCHUNGSZENTRUM JÜLICH GMBH, 52425 Jülich (DE)
(72) Erfinder: Gottselig, Bernd, D-5020 Frechen (DE); Gyarmati, Ernö, Dr., D-5170 Jülich (DE); Naoumidis, Aristides, Dr., D-5170 Jülich (DE)

(56) Entgegenhaltungen:
- EP-A- 0 209 672
- WO-A-86/01446
- CHEMICAL ABSTRACTS, Band 105, Nr. 20, November 1986, Seite 307, Nr. 177334z, Columbus, Ohio, US; & JP-A-61 132 570 (MIYATA GIKEN Y.K.) 20-06-1986
- IDEM
- JOURNAL OF THE AMERICAN CERAMIC SOCIETY, Band 68, Nr. 6, Juni 1985, Seiten C-151 - C-153, Columbus. Ohio, US; T.J. MOORE: "Feasibility study of the welding of SiC"
- CHEMICAL ABSTRACTS, Band 104, Nr. 18, 5. Mai 1986, Seite 341, Nr. 154386h, Columbus, Ohio, US; & JP-A-60 251 177 (OSAKA UNIVERSITY; SUMITOMO ELECTRIC INDUSTRIES, LTD) 11-12-1985
- IDEM
- FORSCHUNGSBERICHTE DER DEUTSCHEN KERAMISCHEN GESELLSCHAFT, Band 1, Nr. 2, 1985, Seiten 188-198; J. MALISZEWSKI et al.: "Ein Beitrag zur Verbindung von SiC-Keramiken"

## Beschreibung

Die Erfindung bezieht sich auf ein Verfahren zum Verbinden von SiC-Formteilen miteinander vermittels einer carbidischen Verbindungsschicht zwischen den SiC-Fügeflächen durch Heißpressen, und sie umfaßt ein Verfahren zur Verbindung eines SiC-Formteils mit einem Metallteil sowie Siliciumcarbid-Halbzeuge mit für eine Lötverbindung mit einem Metallteil vorbereiteter SiC-Fügefläche bzw. in Form von Zwischenstücken mit beidseitig für das Verbinden von SiC-Formteilen vorbereiteten SiC-Fügeflächen.

Siliciumcarbid ist als Material für Hochtemperaturanwendungen von erheblichem Interesse. Wegen seiner hohen Härte bestehen allerdings Formgebungsschwierigkeiten, und insbesondere kompliziert gestaltete Körper werden daher durch Verbinden von Teilkörpern erzeugt.

Zum Verbinden von Siliciumcarbidformteilen insbesondere miteinander sind bereits unterschiedliche Fügetechniken bekannt, zu denen Fügeverfahren in der Heißpresse gehören, bei denen ggf. haftvermittelnde Schichten längs der Fügenaht vorgesehen werden.

So wird in der DE-PS 30 03 186 ein Verfahren beschrieben, bei dem freies Silicium enthaltende Oberflächen durch Diffusionsschweißen bis ca. 1400°C bei Drucken von z.B. 400 bar miteinander verbunden werden.

Gemäß der DE-OS 35 18 710 werden aus drucklos gesintertem SiC oder heißgepreßtem SiC bestehende Formteile in der Heißpresse miteinander verbunden, wobei auf zumindest eine der polierten Fügeflächen eine aktivierend wirkende Schicht eines Carbid- und/oder Silicidbildners der Gruppe, Ag, Al, Au, B, Be, Co, Cr, Cu, Fe, Mg, Mn, Mo, Nb, Ni, Pd, Pt, Ti, V, W und Zr in maximal 1 µm Schichtdicke aufgebracht wird, die nach dem Fügeverfahren nicht mehr wahrnehmbar ist.

In der DE-OS 36 08 559 wird ein Verfahren zum Verbinden von Siliciumcarbid-Formteilen in der Heißpresse beschrieben, bei dem längs der Fügenaht eine haftvermittelnde Schicht aus einer Kupfer oder Kobalt enthaltenden Manganlegierung vorgesehen wird, die zusätzlich Cr, Ti, Zr, Fe, Ni und/oder Ta aufweisen kann.

Schließlich wird in den "Fortschrittsberichten der Deutschen Keramischen Gesellschaft" Band 1 (1985) Heft 2, Seiten 188 - 198 über Untersuchungen zum Diffusionsschweißen von Siliciumcarbid-Formteilen berichtet, bei denen als Haftvermittler längs der Fügenaht Carbid- und Silicidbildner wie Pt, Pd, Cu, Ni, Co, Fe, Mn, Cr, Mo, Zr, Nb, Hf, Al, Ti, V, Ta und W in Betracht gezogen wurden.

Temperaturverhalten und Festigkeit der erhaltenen Körper, insbesondere längs der Fügenaht, sind jedoch noch nicht voll befriedigend, und es ist daher Aufgabe der vorliegenden Erfindung, ein Fügeverfahren für Siliciumcarbid-Formteile miteinander oder mit Metall-Formteilen vorzusehen, bei dem die erhaltenen Körper gute Festigkeitseigenschaften aufweisen und vorzugsweise längs der Fügenaht Festigkeiten erreicht werden können, die im wesentlichen denjenigen des Grundmaterials entsprechen.

Das zu diesem Zweck entwickelte erfindungsgemäße Verfahren ist im wesentlichen dadurch gekennzeichnet, daß als Verbindungsschicht eine Ti₃SiC₂-Schicht
a) aus bereits vorbereitetem Ti₃SiC₂ oder
b) aus einer (5 : 1)-Mischung von TiC_{0,8} + TiSi₂ oder
c) aus einer auf zumindest eine der polierten Fügeflächen aufgebrachten 1 - 3 µm dicken Ti-Schicht
durch Heißpressen bei 1200 - 1600°C unter einem Preßdruck von 5 - 100 MPa in reduzierender Schutzgasatmosphäre während mindestens 0,5 Std. erzeugt wird.

Zum Fügen von SiC mit SiC durch Heißpressen wird also entweder bereits fertiges Ti₃SiC₂(z.B. als Pulver-Dispersion) oder eine Pulvermischung aus Ti₃SiC₂ bildenden Komponenten und insbesondere aus TiC_{0,8} + TiSi₂ (5 : 1) zwischen die Fügeflächen gebracht oder durch Aufbringen einer dünnen Titanschicht auf zumindest eine der polierten Fügeflächen "in situ" beim Heißpreßvorgang eine Ti₃SiC₂-Verbindungsschicht erzeugt.

Das längs der Fügenaht vorhandene bzw. gebildete Titancarbosilicid dient aufgrund ausreichender Plastizität dem Abbau innerer Spannungen des Verbundes nach dem Fügen, so daß die Biegefestigkeit der gefügten Produkte, insbesondere der mit dünner in situ gebildeter Ti₃SiC₂-Schicht gefügten Körper innerhalb der Standardabweichung der Festigkeitswerte des Grundmaterials liegt, während bislang lediglich 30 - 50 % der Grundfestigkeit erzielt wurden.

Das Heißpressen erfolgt insbesondere bei 1300 - 1500°C. Optimale Fügetemperaturen liegen bei 1450 - 1500°C, und es werden Preßdrucke zwischen 15 und 30 MPa bevorzugt. Als reduzierendes Schutzgas zur Verhinderung einer Oxidation des Titans eignen sich insbesondere wasserstoffhaltige Argongemische, wobei speziell Ar/4 % H₂ verwendet wurde. Andere Schutzgase können ebenfalls vorgesehen werden, sofern sie einen geringen Sauerstoffpartialdruck über dem Titan gewährleisten.

Die Haltezeiten auf dem Niveau der Fügetemperaturen liegen insbesondere bei 0,5 bis 1 h. Sie hängen bei der "in situ"-Technik von den Titanschichtdicken ab. Zeiten von 0,5 h sind für Ti-Dicken von 1 - 3 µm bereits ausreichend. Fügezeiten von 1 h ergaben die besten Ergebnisse. Längere Fügezeiten sind nicht erforderlich, aber ohne Nachteil anwendbar.

Die erforderliche Titanschichtdicke liegt für optimale Ergebnisse (besonders auch unter Berücksichtigung eines späteren Einsatzes des Verbundes unter korrosiven Bedingungen) zwischen 1 und 3 µm. Unterhalb von 1 µm Titanschichtdicke wird auch ein Verbund unter den genannten Fügebedingungen erreicht, es können aber die inneren Spannungen des Verbundes beim Abkühlen nicht so gut abgebaut werden. Dickere Schichten aus Titan bewirken gleichfalls, daß ein Verbund mit hohen Festigkeiten erreicht wird, aber die Anfälligkeit des Verbundes im Einsatz unter korrosiven Bedingungen wird erhöht.

Die Fügeflächen der durch "in situ"-Technik zu verbindenden Keramikpartner sollten im polierten Zustand vorliegen (Ra: 0,05 - 0,1 µm). Im Falle höherer Rauhigkeiten ist darauf zu achten, daß die aufzubringende Titanschicht um mindestens 1 µm dicker ist als die Oberflächenrauhigkeit des Siliciumcarbids.

In den Fügeflächen des Siliciumcarbids sind im allgemeinen nach der Vorbereitung für den Fügeprozeß Verunreinigungen vorhanden, die als Sinterhilfsmittel oder durch vorgeschaltete Reinigungs- oder Mahlprozesse oder auch durch gezielte Infiltration in das SiC-Keramikmaterial eingetragen wurden. Solche Verunreinigungen üben keinen negativen Einfluß auf das Festigkeitsverhalten des Verbundes aus.

Beim Fügen von SiC-Formteilen mit einer Pulvermischung aus den Ti₃SiC₂ bildenden Komponenten TiC_{0,8} + TiSi₂ (5 : 1) oder vorgefertigtem Ti₃SiC₂, das in Form von Pulver (mit einer Korngröße ≲ 5 µm), als Dispersion oder in Folienform aufgebracht oder aufgesputtert werden kann, spielen Oberflächenrauhigkeiten ebenso wie die Ti₃SiC₂-Schichtdicken eine geringere Rolle.

Das Ti₃SiC₂ kann bis zu einem gewissen Grade mit Fremdphasen wie TiSi₂, Ti₅Si₃ oder TiC "verunreinigt" sein, wobei jedoch der Anteil der "Verunreinigung" nicht über 15 % hinausgehen soll.

Ti₃SiC₂ kann in üblicher Weise durch Aufheizen pulverförmiger Komponenten erhalten werden, z.B. entsteht durch intensive Homogenisierung von sehr feinem Si-Pulver (Korngröße ∼ 1 µm), kolloidalem Graphit und Ti-Hydridpulver in stöchiometrischem Verhältnis in sauerstofffreier Umgebung und Erhitzen der Mischung auf eine Temperatur zwischen 1250 und 1550°C für 1 h ein Produkt, das überwiegend aus Ti₃SiC₂ besteht. Alternativ können Mischungen von Titanhydrid und Siliciumcarbid, Titancarbid und Silicium oder auch Titancarbid und Titansilicid als Ausgangsmaterialien dienen. Besonders zweckmäßig wird mit einer Mischung von TiC_{0,8} mit TiSi₂ etwa im Verhältnis 5 : 1 gearbeitet und die Pulvermischung durch Aufheizen auf 1400°C für 1 - 2 h umgesetzt. Besonders günstig ist dabei die Verwendung von Pulvermischungen mit einem geringfügigen TiSi₂-Überschuß, speziell von TiC_{0,8} + TiSi₂-Mischungen im Verhältnis von 5 : 1,06.

Zweckmäßig ist die Anwendung solcher Pulver in Form einer Dispersion, insbesondere auf nicht ebenen und nicht horizontalen Flächen. Dazu wird das Pulver zunächst mit viskosen Alkoholen (Ethylenglykol, Diethylenglykol etc.) zu einer Dispersion verrührt. Diese Dispersion wird dann in herkömmlicher Weise (Aufrollen, Aufstreichen, Aufdrucken etc.) auf die Fügeflächen aufgebracht. Nach dem Anstoß der Fügeflächen erfolgt ein Verdampfen des Dispergierungsmittels durch Erwärmung evtl. unter vermindertem Druck unmittelbar vor dem Fügen in der Heißpresse.

Besonders zweckmäßig ist die Verbindung von SiC-Teilkörpern unter Zwischenschaltung eines (konturgleichen) SiC-Zwischenstücks (wie z.B. eines SiC-Ringes für die Verbindung von SiC-Rohrenden), dessen beide Fügeflächen entweder mit einem Titanfilm von 1 - 3 µm Dicke oder mit einer Ti₃SiC₂-Schicht (insbesondere aufgesputtert oder aus TiC und TiSi₂ gebildet) versehen sind. Auf diese Weise kann insbesondere eine Ti-Beschichtung größerer und ggf. unhandlicher Teile vermieden werden.

Solche für das Verbinden von SiC-Formteilen vorbereiteten Zwischenstücke können ohne weiteres bevorratet und dann bei Bedarf eingesetzt werden.

Eine an das Siliciumcarbid angrenzende Ti₃SiC₂-Schicht eignet sich nicht nur als Zwischenschicht für das Verbinden von Siliciumcarbid-Formteilen miteinander, sondern sie ist aufgrund einer guten Benetzbarkeit durch Metall auch für die Verbindung von Siliciumcarbid-Formteilen mit Metallteilen geeignet, die auf das mit Ti₃SiC₂-Schicht versehene SiC-Formteil durch Hartlöten aufgebracht werden können.

Zu diesem Zweck wird auf die polierte Fügefläche des SiC-Formteils insbesondere eine 1 - 3 µm dicke Titanschicht aufgebracht und die Keramik dann zumindest für 0,5 h, insbesondere etwa 1 - 2 h unter reduzierendem Schutzgas auf eine Temperatur im Bereich von 1200 - 1600°C, insbesondere 1300 - 1500°C, aufgeheizt. Die Ti₃SiC₂-Schicht kann aber auch aufgesputtert oder aus den Komponenten gebildet werden.

Die auf diese Weise auf der Siliciumcarbid-Oberfläche gebildete Ti₃SiC₂-Schicht sorgt zum einen am Übergang von Keramik zu Metall für eine gute Haftung und zum anderen wird die Ausbildung störender Reaktionsprodukte am Übergang zum Metall weitgehend verhindert.

SiC-Formteile mit Ti₃SiC₂-Oberflächenschicht längs der Fügefläche können nach Entnahme aus dem Ofen unmittelbar für die Verbindung mit beliebigen Metallteilen durch Löten verwendet werden, wobei jedoch Reaktivmetalle wie Ti, Zr usw. vermieden werden sollen. Erfolgreiche Lötverbindungen mit Eisenbasis und Nickelbasis-Legierungen können mit Loten, wie Kupferbasisloten, Silberbasisloten, Nickelbasisloten und Palladiumbasisloten hergestellt werden.

Die mit Ti₃SiC₂-Oberflächenschicht versehenen SiC-Formteile können jedoch ohne weiteres als SiC-Halbzeuge bevorratet und in den Handel gebracht werden.

Nachfolgend wird die Erfindung anhand von Beispielen näher erläutert. Von diesen zeigen die Beispiele 1 bis 3 die Verbindung von Siliciumcarbid-Formteilen miteinander mittels einer in situ gebildeten Ti₃SiC₂-Schicht; die Beispiele 4 bis 6 die Verbindung von SiC-Formteilen miteinander unter Anwendung einer vorgefertigten Ti₃SiC₂-Phase und das Beispiel 7 die Verbindung von SiC-Formteilen mit Metallteilen.

### Beispiele 1 bis 3

Bei den nachfolgend beschriebenen Beispielen 1 bis 3 wurde jeweils eine rechteckige Platte aus Siliciumcarbid zerteilt. Die einzelnen Teile wurden nach Beschichtung der Trennflächen mit Titan in der Presse wieder miteinander verbunden, wobei unter unterschiedlichen Fügebedingungen, wie unten angegeben, gearbeitet wurde.

In jedem Falle wurde die SiC-Platte in drei Teile geschnitten, mit einem mittleren Segment von etwa 3 mm Stärke. Die Schnittflächen wurden geschliffen und poliert und das mittlere Segment in einer Sputteranlage beidseits mit Titan beschichtet. Die wieder zusammengebrachten Teilkörper wurden dann in eine mit Führung versehene Presse gebracht, die so während des Heißpressens bei Einwirkung des Preßstempels ihre gewünschte Position beibehielten.

Nach Aufbringen eines geringen Vordrucks auf die zu fügenden Teile wurde die Presse geschlossen und der Fügeraum evakuiert. Nach ausreichender Druckverminderung (auf 10⁻² Torr) wurde Schutzgas durch die Apparatur geleitet, die dann auf Fügetemperatur aufgeheizt wurde. Nach ablauf der eigentlichen Fügezeit wurde die Stromzufuhr unterbrochen und die Apparatur der Abkühlung bis auf Raumtemperatur durch Konvektion überlassen. Nach der Abkühlung wurde die gefügte Probe der Presse entnommen und getestet.

Die nachfolgende Tabelle zeigt die unterschiedlichen Verfahrensbedingungen, die bei den Beispielen 1 bis 3 eingehalten wurden.

| | (1) | (2) | (3) |
|---|---|---|---|
| Rauhigkeit der Paßflächen: | Ra = 0,05 µm | Ra = 0,1 µm | Ra = 0,05 µm |
| Titanschichtdicke: | d_{Ti} = 1,0 µm | d_{Ti} = 3,0 µm | d_{Ti} = 3,0 µm |
| Aufheizrate: | t_{auf} = 300°C/min | t_{auf} = 300°C/ min | t_{auf} = 150°C/min |
| Fügetemperatur: | T_{G} = 1450°C | T_{G} = 1450°C | T_{G} = 1450°C |
| Fügedauer: | t_{G} = 1h | t_{G} = 0,5h | t_{G} = 1h |
| Atmosphäre: | Ar/4 % H₂ | Ar/4 % H₂ | Ar/4 % H₂ |
| Preßdruck: | p = 30 MPa | p = 30 MPa | p = 15 MPa |

Die bei allen drei Beispielen erzielten Festigkeitswerte entsprachen der Festigkeit des Grundmaterials.

### Beispiel 4

Die Fügefläche eines SiC-Quaders wurde mit Diethylenglykol angefeuchtet und anschließend mit Ti₃SiC₂-Pulver bestäubt. Die Gegenfläche eines zweiten SiC-Quaders wurde aufgelegt und in einer Graphithalterung fest montiert. Diese Anordnung wurde in der Heißpresse in 300 KPa Ar/4 % H₂-Atmosphäre unter einem Preßdruck von 20 MPa langsam in 3 h von Raumtemperatur auf 1450°C erhitzt. Nach einer Haltezeit von 0,5 h und Abkühlen wurde die Probe zerteilt und die Festigkeit in einer 4-Punkt-Biegeprüfmaschine gemessen. Die Biegefestigkeit der gefügten Prüflinge war mit der des Ausgangsmaterials identisch.

### Beispiel 5

Auf beide Stirnflächen eines SiC-Ringes wurde je eine 2 µm dicke Ti₃SiC₂-Schicht aufgesputtert. Als Sputterquelle diente ein Target, das durch Zusammenpressen von Ti₃SiC₂-Pulver in einer Graphitmatrize mit SiC-Oberfläche bei Temperaturen zwischen 1300 und 1500°C und Drucken von 15 bis 50 MPa für eine Dauer von 0,5 bis 5 h erhalten worden war. Der beidseits beschichtete SiC-Ring wurde zwischen die Stirnflächen von zwei SiC-Rohrstücken gleichen Querschnitts gebracht. Das Fügen wurde wie im Beispiel 4 angegeben durchgeführt. Die Festigkeitsuntersuchungen ergaben das gleiche Ergebnis wie in Beispiel 4.

### Beispiel 6

Zum Verbinden einer muldenförmig ausgearbeiteten SiC-Fläche mit Paßstück wurde eine Ti₃SiC₂-Folie mit der entsprechenden Kontur hergestellt. Für die Anfertigung dieser Folie wurde in dem ersten Schritt ein NaCl-Preßling mit einer zum Paßstück identischen Oberfläche durch Pressen von feinkristallinem NaCl in einer Stahlpreßform erzeugt. In einem Zweiten Verfahrensschritt wurde auf das NaCl-Paßstück eine ca. 3 µm dicke Ti₃SiC₂-Schicht aufgesputtert. Anschließend wurde das Ti₃SiC₂ beschichtete NaCl-Paßstück in die Mulde eingeführt und das NaCl durch Wasser weggelöst. Nach einer Trocknungsperiode wurde das SiC-Paßstück in die Mulde gelegt und die Anordnung wie in Beispiel 4 beschrieben heißgepreßt. Die erreichte Festigkeit der Fügefläche entsprach auch in diesem Fall derjenigen des Ausgangsmaterials.

### Beispiel 7

Die Vorbereitung von SiC-Keramik zur Verbindung mit Metall umfaßt im wesentlichen folgende Schritte
- Polieren der SiC-Keramikoberfläche auf Rauhigkeiten zwischen Ra = 0,01 bis 0,1 µm.
- Aufbringen einer 1 bis 3 µm dicken Titanschicht auf die polierte Oberfläche, insbesondere durch Aufsputtern von Titan. Vorzugsweise wird die polierte SiC-Fläche vorher durch Ar⁺-Ätzen von an der Keramikoberfläche haftenden Verunreinigungen befreit.
- Glühen der titanbeschichteten Keramikoberfläche zur Umwandlung der Oberflächenschicht in Titancarbosilieid (Ti₃SiC₂) bei Temperaturen von 1200 bis 1550°C unter Schutzgas, wobei insbesondere wie folgt verfahren wird:
Das Werkstück mit titanbeschichteter Oberfläche wird in einen Ofen gebracht, der auf ca. 1 Pa evakuiert wird. Danach wird eine Schutzgasspülung (Ar von 99,9997%iger Reinheit) zugeschaltet. Das zuströmende Gas wird dabei zunächst durch Überleiten über P₂O₅ getrochnet und über Titanschwamm geleitet, um oxidierende Reste zu beseitigen. Sodann wird das Werkstück bzw. die beschichtete Oberfläche für zumindest 0,5 h auf die genannte Glühtemperatur aufgeheizt. insbesondere auf etwa 1450°C. Die Aufheizrate kann dabei z.B. zwischen 20 und 60°C/min oder darüber liegen.

Die Behandlungsdauer bei Glühtemperatur hängt von der Schichtdicke des Titans ab und beträgt insbesondere etwa 1 bis 2 h. So wird beispielsweise ein mit 3,0 µm Ti beschichtetes Material etwa 2 h lang bei 1450°C gehalten.

Die Abkühlung erfolgt im Ofen, aus dem dann das beschichtete Werkstück entnommen wird.

Die auf diese Weise behandelte Keramikoberfläche weist eine zu ca. 95 % aus Titancarbosilicid (Ti₃SiC₂) mit Spuren von TiSi₂ und TiC bestehende Oberflächenschicht auf, die fest mit der Keramik verzahnt ist und für Lötverbindungen mit Metallen, wie insbesondere mit Stahl oder Nickelbasislegierungen hervorragend geeignet ist, die, wie nachstehend beschrieben, gebildet werden:
1) Herstellung einer Lötverbindung:
   Bei Löttemperaturen bis zu 1200°C und üblicherweise von 900 bis 1100°C lassen sich mit einer so behandelten Oberfläche unter Anwendung üblicher Lote, feste Lötverbindungen mit Metallteilen schaffen, die aus gebräuchlichen Legierungen bestehen, aber keine Reaktivmetalle, wie Ti, Zr usw. enthalten dürfen. Als Fügepartner dienten vornehmlich Inconel® 617 und Incoloy®800H.
   Der metallische Fügepartner sollte jeweils vor der Fügung geschliffen und poliert werden, wobei die Endrauhigkeit der Kontaktfläche Ra = 0,01 bis 0,1 µm betragen sollte.

## Patentansprüche

1. Verfahren zum Verbinden von SiC-Formteilen miteinander vermittels einer carbidischen Verbindungsschicht zwischen den SiC-Fügeflächen durch Heißpressen,
**dadurch gekennzeichnet,**
daß als Verbindungsschicht eine Ti₃SiC₂-Schicht
a) aus bereits vorbereitetem Ti₃SiC₂ oder
b) aus einer (5 : 1)-Mischung von TiC_{0,8} + TiSi₂ oder
c) aus einer auf zumindest eine der polierten Fügeflächen aufgebrachten 1 - 3 µm dicken Ti-Schicht
durch Heißpressen bei 1200 - 1600°C unter einem Preßdruck von 5 - 100 MPa in reduzierender Schutzgasatmosphäre während mindestens 0,5 Std. erzeugt wird.

2. Verfahren nach Anspruch 1a,
**dadurch gekennzeichnet,**
daß zwischen den SiC-Fügeflächen vor dem Heißpressen Ti₃SiC₂ als Pulver, als Pulverdispersion oder in Folienform oder durch Aufsputtern vorgesehen wird.

3. Verfahren nach Anspruch 2,
**dadurch gekennzeichnet,**
daß das Ti₃SiC₂ maximal 15 % Ti-, Si- und/oder C-haltige Fremdphasen enthält.

4. Verfahren nach Anspruch 2,
**dadurch gekennzeichnet,**
daß das Ti₃SiC₂ in Form von Pulver mit einem maximalen Korndurchmesser von 5 µm vervendet wird.

5. Verfahren nach einem der vorangehenden Ansprüche,
**dadurch gekennzeichnet,**
daß das Heißpressen bei 1450 - 1500°C erfolgt.

6. Verfahren nach einem der Ansprüche 1 bis 4,
**dadurch gekennzeichnet,**
daß Preßdrucke zwischen 15 und 30 MPa angewandt werden.

7. Verfahren nach einem der Ansprüche 1 bis 4,
**dadurch gekennzeichnet,**
daß eine Heißpreßdauer von einer Std. gewählt wird.

8. Verfahren nach einem der vorangehenden Ansprüche,
**dadurch gekennzeichnet,**
daß als reduzierende Schutzgasatmosphäre wasserstoffhaltiges Argon, insbesondere ein Ar/4 % H₂-Gemisch vorgesehen wird.

9. Verfahren nach einem der vorangehenden Ansprüche,
**dadurch gekennzeichnet,**
daß die Verbindung der SiC-Formteile durch Anordnen eines beidseits mit Titan, mit einer Mischung aus TiC_{0,8} + TiSi₂ im Verhältnis von etwa 5 : 1 oder mit Ti₃SiC₂ beschichteten konturgleichen Zwischenstücks aus Siliciumcarbid zwischen den Fügeflächen und Heißpressen erfolgt.

10. SiC-Zwischenstück von 1 - 10 mm Dicke, das den Fügeflächen von zu verbindenden Siliciumcarbid-Formteilen angepaßt und beidseits jeweils mit Ti₃SiC₂ oder 1 - 3 µm Titan beschichtet ist zur Durchführung des Verfahrens nach Anspruch 9.

11. Verfahren zum Verbinden eines SiC-Formteils mit einem Formteil aus Metall,
**dadurch gekennzeichnet,**
daß auf der polierten Fügefläche des SiC-Formteils (a) eine Ti₃SiC₂-Schicht durch Aufsputtern gebildet oder durch Aufbringen von (b) TiC_{0,8} + TiSi₂ im, Verhältnis von ca. 5 : 1 oder (c) einer 1 - 3 µm dicken Titanschicht und Aufheizen des nach (b) bzw. (c) beschichteten SiC-Formteils für zumindest 0,5 h unter reduzierender Schutzgasatmosphäre auf eine Temperatur im Bereich von 1200 - 1600°C erzeugt und das so mit der Ti₃SiC₂-Oberflächenschicht versehene SiC-Formteil dann mit dem Formteil aus Metall durch Hartlöten verbunden wird.

12. Verfahren nach Anspruch 1c oder 11c,
**dadurch gekennzeichnet,**
daß die SiC-Fügefläche vor dem Aufbringen von Titan durch Ar⁺-Ätzen gereinigt wird.

13. Verfahren nach Anspruch 1c, 11c oder 12,
**dadurch gekennzeichnet,**
daß die Titanschicht aufgesputtert wird.

14. Verfahren nach einem der Ansprüche 11c bis 13,
**dadurch gekennzeichnet,**
daß das titanbeschichtete SiC-Formteil 1 bis 2 h lang erhitzt wird.

15. Verfahren nach einem der Ansprüche 11c bis 14,
**dadurch gekennzeichnet,**
daß das titanbeschichtete SiC-Formteil auf 1450°C erhitzt wird.

16. Verfahren nach einem der Ansprüche 11c bis 15,
**dadurch gekennzeichnet,**
daß das titanbeschichtete SiC-Formteil in reduzierter Schutzgasatmosphäre, insbesondere in wasserstoffhaltigem Argon aufgeheizt wird.

17. SiC-Halbzeug mit vorbereiteter Fügefläche für eine Schweiß- oder Lötverbindung mit einem Metallteil,
**gekennzeichnet durch**
eine Ti₃SiC₂-Oberflächenschicht längs der SiC-Fügefläche.

## Claims

1. A method of joining SiC molded parts to each other by hot pressing, by means of a carbidic bonding layer between the SiC joint faces, characterised in that a Ti₃SiC₂ layer is produced as the bonding layer
a) from ready-prepared Ti₃SiC₂ or
b) from a ( 5 : 1) mixture of TiC_{0.8} + TiSi₂ or
c) from a Ti layer 1 - 3 µm thick deposited on at least one of the polished joint faces
by hot pressing at 1200 - 1600°C at a molding pressure of 5 - 100 MPa in a reducing protective gas atmosphere for at least 0.5 hours.

2. A method according to claim 1a, characterised in that Ti₃SiC₂ is provided between the SiC joint faces before hot pressing as a powder, as a powder dispersion, in the form of a foil or by sputtering.

3. A method according to claim 2, characterised in that the Ti₃SiC₂ contains a maximum of 15 % of extraneous phases containing Ti, Si and/or C.

4. A method according to claim 2, characterised in that the Ti₃SiC₂ is used in the form of a powder with a maximum grain diameter of 5 µm.

5. A method according to any one of the preceding claims, characterised in that hot pressing is carried out at 1450 - 1500°C.

6. A method according to any one of claims 1 to 4, characterised in that mould pressures between 15 and 30 MPa are applied.

7. A method according to any one of claims 1 to 4, characterised in that a hot pressing duration of one hour is selected.

8. A method according to any one of the preceding claims, characterised in that argon which contains hydrogen, particularly an Ar/4 % H₂ mixture, is used as the reducing protective gas atmosphere.

9. A method according to any one of the preceding claims, characterised in that joining of the SiC molded parts is effected by disposing between the joint faces a transition piece of silicon carbide which has the same profile and which is coated on both sides with titanium, with a mixture of TiC_{0.8} + TiSi₂ in a ratio of about 5 : 1 or with Ti₃SiC₂, and hot pressing.

10. A SiC transition piece 1 - 10 mm thick, which is matched to the joint faces of silicon carbide structural parts to be joined and which is coated on both sides with Ti₃SiC₂ or with 1 - 3 µm titanium, for carrying out the method according to claim 9.

11. A method of joining a SiC molded part to a molded part of metal, characterised in that on the polished joint face of the SiC molded part (a) a Ti₃SiC₂ layer is formed by sputtering, or is produced by the deposition of (b) Ti_{0.8} + TiSi₂ at a ratio of about 5 : 1, or (c) of a titanium layer 1 - 3 µm thick and by heating the SiC molded part coated according to (b) or (c) for at least 0.5 hours under a reducing protective gas atmosphere at a temperature in the range from 1200 - 1600°C, and the SiC molded part which is thus provided with the Ti₃SiC₂ surface layer is then joined to the molded part of metal by hard soldering.

12. A method according to claim 1c or 11c, characterised in that the SiC joint face is cleaned before the deposition of titanium by Ar⁺ etching.

13. A method according to claim 1c, 11c or 12, characterised in that the titanium layer is sputtered on.

14. A method according to any one of claims 11c to 13, characterised in that the titanium-coated SiC molded part is heated for one to two hours.

15. A method according to any one of claims 11c to 14, characterised in that the titanium-coated SiC molded part is heated at 1450°C.

16. A method according to any one of claims 11c to 15, characterised in that the titanium-coated SiC molded part is heated in a reducing protective gas atmosphere, particularly in argon which contains hydrogen.

17. A SiC semifinished product with a prepared joint face for a welded or hard-soldered joint to a metal part, characterised by a Ti₃SiC₂ surface layer along the SiC joint face.

## Revendications

1. Procédé d'assemblage de pièces moulées de SiC au moyen d'une couche d'assemblage à base de carbure entre les surfaces d'assemblage de SiC, par compression à chaud, caractérisé en ce qu'on produit, comme couche d'assemblage, une couche de Ti₃SiC₂ constituée
a) de Ti₃SiC₂ déjà préparé ou
b) d'un mélange (5:1) de TiC_{0,8} + TiSi₂ ou
c) d'une couche de Ti de 1-3 µm d'épaisseur appliquée sur au moins une des surfaces d assemblage polies,
par compression à chaud à 1200-1600°C, à une force de compression de 5-100 MPa, dans une atmosphère réductrice de gaz protecteur, pendant au moins 0,5 heure.

2. Procédé selon la revendication 1 a), caractérisé en ce qu'il est prévu entre les surfaces d'assemblage de SiC, avant la compression a chaud, du Ti₃SiC₂ sous la forme d'une poudre, d'une dispersion de poudre ou sous la forme d'une feuille, ou appliqué par pulvérisation.

3. Procédé selon la revendication 2, caractérisé en ce que Ti₃SiC₂ contient au plus 15 % de phases étrangères contenant Ti, Si et/ou C.

4. Procédé selon la revendication 2, caractérisé en ce qu'on utilise Ti₃SiC₂ sous la forme d une poudre ayant un diamètre maximal de grains de 5 µm.

5. Procédé selon l'une des revendications précédentes, caractérisé en ce qu'on effectue la compression à chaud à 1450-1500°C.

6. Procédé selon l'une des revendications 1 à 4, caractérisé en ce qu'on utilise des forces de compression valant entre 15 et 30 MPa.

7. Procédé selon l'une des revendications 1 à 4, caractérisé en ce qu'on choisit une durée de compression à chaud d'une heure.

8. Procédé selon l'une des revendications précédentes, caractérisé en ce qu'il est prévu, comme atmosphère réductrice de gaz protecteur, de l'argon contenant de l'hydrogène, en particulier un mélange de Ar/4% H₂.

9. Procédé selon l'une des revendications précédentes, caractérisé en ce que l'assemblage des pièces moulées de SiC se fait grâce à la mise en place, entre les surfaces d'assemblage, d'une pièce intermédiaire de carbure de silicium ayant des contours correspondants aux surfaces d'assemblage, revêtue des deux côtés de titane, d'un mélange de TiC_{0,8} + TiSi₂ à un rapport de 5:1, ou de Ti₃SiC₂, et par compression à chaud.

10. Pièce intermédiaire de SiC, de 1-10 mm d'épaisseur, qui correspond aux surfaces d'assemblage des pièces moulées de carbure de silicium à assembler et est revêtue des deux côtés de Ti₃SiC₂ ou de 1-3 µm de titane, pour la mise en oeuvre du procédé selon la revendication 9.

11. Procédé d'assemblage d une pièce moulée de SiC avec une pièce moulée métallique, caractérisé en ce que, sur la surface d'assemblage polie de la pièce moulée de SiC, (a) une couche de Ti₃SiC₂ est formée par pulvérisation, ou est produite par application (b) de TiC_{0,8} + TiSi₂ à un rapport d'environ 5:1 ou (c) d'une couche de titane de 1-3 µm d'épaisseur, et chauffage de la pièce moulée de SiC revêtue selon (b) ou (c), pendant au moins 0,5 heure dans une atmosphère réductrice de gaz protecteur, à une température comprise entre 1200 et 1600°C, et ensuite, la pièce moulée de SiC revêtue d'une couche superficielle de Ti₃SiC₂ est assemblée avec la pièce moulée métallique par brasage fort.

12. Procédé selon la revendication 1 c) ou 11 c), caractérisé en ce que la surface d'assemblage de SiC est nettoyée par attaque avec Ar⁺ avant l'application du titane.

13. Procédé selon la revendication 1 c), 11 c) ou 12, caractérisé en ce que la couche de titane est appliquée par pulvérisation.

14. Procédé selon l'une des revendications 11 c) à 13, caractérisé en ce que la pièce moulée de SiC revêtue de titane est chauffée pendant 1 à 2 heures.

15. Procédé selon l'une des revendications 11 c) à 14, caractérisé en ce que la pièce moulée de SiC revêtue de titane est chauffée à 1450°C.

16. Procédé selon l'une des revendications 11 c) à 15, caractérisé en ce que la pièce moulée de SiC revêtue de titane est chauffée dans une atmosphère réductrice de gaz protecteur, en particulier de l'argon contenant de l'hydrogène.

17. Produit semi-fini de SiC ayant une surface d'assemblage préparée pour un assemblage par soudage ou brasage avec une pièce métallique, caractérisé par une couche superficielle de Ti₃SiC₂ le long de la surface d'assemblage de SiC.
